# EUROPÄISCHE PATENTSCHRIFT

(11) **EP 0 795 525 B1**
(45) Veröffentlichungstag und Bekanntmachung des Hinweises auf die Patenterteilung: **08.12.1999**
(21) Anmeldenummer: 97103801.3
(22) Anmeldetag: 07.03.1997
(51) Int. Cl.: C04B 41/50, C04B 41/45, C03C 17/27

(54) **Lüsterfarbe**
Iridescent paint
Peinture iridescente

(30) Priorität: 14.03.1996 DE 19609942
(43) Veröffentlichungstag der Anmeldung: 17.09.1997
(73) Patentinhaber: W.C. Heraeus GmbH & Co. KG, 63450 Hanau (DE)
(72) Erfinder: Landgraf, Günter, Dr., 63454 Hanau (DE)
(74) Vertreter: Kühn, Hans-Christian

(56) Entgegenhaltungen:
- EP-A- 0 374 754
- US-A- 5 064 684
- US-A- 5 217 754
- US-A- 5 244 691
- US-A- 5 271 797

## Beschreibung

Die Erfindung betrifft eine Lüsterfarbe für die Dekoration von Glas, Keramik und Porzellan aus einem organischen Träger-Medium, darin gelöster organischer Metallverbindung und gegebenenfalls Zusatzstoffen.

Lüsterfarben für die Dekoration von Glas, Keramik und Porzellan bestehen aus Lösungen von organischen Metallverbindungen in organischen Träger-Medien, die beim Brand restlos verbrennen oder verdampfen. Nach dem Einbrennen erscheinen sie auf den damit dekorierten Gegenständen als sehr dünne glänzende und irisierende Metalloxid-Schichten.

Farblose Lüster verleihen der Glasuroberfläche einen eigenartigen Hochglanz. Infolge ihrer außergewöhnlich geringen Schichtdicke von 10⁻⁴ - 10⁻⁵ mm, die in der Größenordnung der Wellenlänge des Lichts liegt, und infolge ihres von der Unterlage abweichenden Brechnungskoeffizienten zeigen die meisten Lüster schillernde Irisfarben. Solche farblosen Lüster sind die Tonerde-, Bleioxid-, Zinkoxid-Lüster. Zur Erzeugung von Perlmutterfarben werden häufig Wismut- und Titan-Lüster verwendet.

Farbige Lüster entstehen dadurch, daß Verbindungen der Übergangsmetalle mitverwendet werden, deren Eigenfarben sich dann zu dem charakteristischen Lüsterglanz addieren. So ergeben Eisen-Lüster hellbraunrote bis goldfarbig schimmernde Überzüge, Kobalt-Lüster in hoher Konzentration ein tiefes Dunkelbraun, in starker Verdünnung ein Schokoladebraun, Kupfer-Lüster rötlichbraune Töne, Nickel-Lüster ein schimmerndes Hellbraun, Mangan-Lüster ein Graubraun und Uran-Lüster eine grünlichgelbe Färbung. Eine Reihe von Lüsterfarben läßt sich in interessanten Nuancen durch Zumischen von Glanzgold-Lösung zu verschiedenen Metall-Lüsterfarben erhalten (Ullmanns Encyklopädie der technischen Chemie, 4. Auflage, Band 14, 1977, Seite 11, Verlag Chemie, Weinheim).

Die deutsche Patentschrift 21 08 849 betrifft ein Verfahren zur Herstellung von dünnen, farbigen Lüsterüberzügen auf Körpern aus glasiertem Porzellan, glasierter Keramik, Glas oder Emaille unter Anwendung von Lösungen pyrolytisch zersetzlicher Verbindungen von in mehreren Wertigkeiten existierenden Metallen in organischen Lösungsmitteln. Als pyrolytisch zersetzliche Metallverbindungen werden Carbonyle, besonders Eisen-, Kupfer-, Chrom-, Molybdän-, Kobalt- und Nickelcarbonyle, oder andere organische Metallverbindungen, wie Acetylacetonate und Ester, und als organische Lösungsmittel besonders halogenierte Kohlenwasserstoffe, Alkohole oder Chlorbenzol eingesetzt. Die Konzentration der Metallverbindungen in den Lösungen liegt zwischen etwa 0,01 und 5 %.

In der deutschen Patentschrift 22 33 594 werden organische Lösungsmittel für Metallacetylacetonate zur Herstellung von Metalloxid-Überzügen auf Glas vorgeschlagen, die eine Verbesserung gegenüber Alkohol, Benzol, Toluol und Xylol bewirken sollen. In den aus den Lösungsmitteln und den Acetylacetonaten der Metalle (Magnesium, Aluminium, Indium, Wismut, Kupfer, Zink, Titan, Zirkonium, Vanadin, Chrom, Wolfram, Mangan, Eisen, Nickel, Kobalt, Yttrium, Cer und Thorium) gebildeten Metallacetylacetonat-Lösungen können im allgemeinen bis zu 10 Volumen-% an destilliertem Wasser toleriert werden. Oberhalb dieser Wassermenge neigt der gebildete Metalloxid-Überzug dazu, durch sehr kleine dunkle Flecke verunreinigt zu werden

Es ist die Aufgabe der Erfindung, eine mit Wasser verdünnbare oder Wasser enthaltende Lüsterfarbe der eingangs charakterisierten Art zu finden, die in allen üblichen Auftragsarten auf damit zu dekorierende Gegenstände aufgebracht werden kann. Aus der Lüsterfarbe sollen sich auf Glas, Keramik und Porzellan hochglänzende, irisierende, haftfeste und fehlerfreie dünne Metalloxid-Schichten, die weiß oder farbig sein können, erzeugen lassen.

Die die Lösung der Aufgabe darstellende Lüsterfarbe ist erfindungsgemäß gekennzeichnet durch
ein Träger-Medium aus mit Wasser mischbarem organischem Lösungsmittel, Wasser oder einem Gemisch aus dem organischen Lösungsmittel und Wasser und darin gelöstem polymerem organischem Bindemittel,
in dem Träger-Medium gelöste, thermisch zum Oxid zersetzbare organische Titanverbindung.

Durch Einbrennen dieser Lüsterfarbe auf Glas, Keramik und Porzellan lassen sich hochglänzende silberweiße Titanoxid-Schichten erzeugen.

Eine Ausführungsform der erfindungsgemäßen Lüsterfarbe, die farbige Oxid-Schichten bildet, ist gekennzeichnet durch
ein Träger-Medium aus mit Wasser mischbarem organischem Lösungsmittel, Wasser oder einem Gemisch aus dem organischen Lösungsmittel und Wasser und darin gelöstem polymerem organischem Bindemittel,
in dem Träger-Medium gelöste, thermisch zum Oxid zersetzbare organische Titanverbindung und
eine oder mehrere in dem Träger-Medium gelöste, thermisch zum Oxid zersetzbare organische Verbindungen der Metalle Chrom, Mangan, Eisen, Kobalt, Nickel, Kupfer, Zirkonium und Wismut.

Die erfindungsgemäße Lüsterfarbe hat sich besonders bewährt, wenn sie Titanverbindungen mit Chelatbildnern beziehungsweise Komplexbildnern - im allgemeinen als Titanchelate bezeichnet - enthält. Titanchelate sind an sich bekannt und im Handel erhältlich (Ullmanns Encyklopädie der technischen Chemie, 4. Auflage, Band 23, 1983, Seite 287 - 289, Verlag Chemie, Weinheim). Geeignete Chelatbildner sind Alkanolamine, besonders Di- und Triethanolamin, Diketone, besonders Acetylaceton, Ketocarbonsäureester, besonders Acetessigsäureethylester, Hydroxycarbonsäuren, besonders Milchsäure und Citronensäure, einige Glykole, besonders Octylenglykol (2-Ethylhexandiol-1,3), und Aminopolycarbonsäuren, wie Ethylendiamintetraessigsäure, Nitrilotriessigsäure und Hydroxyethylethylendiaminotriessigsäure.

Für die erfindungsgemäße Lüsterfarbe haben sich Titanacetylacetonate, Titancitrate und Triethanolamintitanate als besonders günstig erwiesen.

Die anderen Metalle werden vorzugsweise als Acetate oder auch als Metallverbindungen mit Chelatbildnern beziehungsweise Komplexbildnern eingesetzt. Als Chelatbildner eignen sich hier ebenfalls die bereits genannten Alkanolamine, Diketone, Ketocarbonsäureester, Hydroxycarbonsäuren, Glykole und Aminopolycarbonsäuren. Metallverbindungen dieser Art sind an sich bekannt und im Handel erhältlich.

Enthält die Lüsterfarbe mehrere Metallverbindungen, so können diese der gleichen Verbindungsklasse oder unterschiedlichen Verbindungsklassen angehören.

Als mit Wasser mischbare organische Lösungsmittel werden Ethanol, Propanol, Ethylenglykol, Propandiole, Glycerin, Diethylenglykol, Dipropylenglykol, Ethylenglykolmono- und -diether, Propylenglykolmono- und -diether, Diethylenglykolmono- und -diether, Dipropylenglykolmono- und -diether, Glykolsäurebutylester, Tetrahydrofurfurylalkohol und Tetrahydrofurfurylacetat bevorzugt. Die Lüsterfarbe kann ein oder mehrere dieser Lösungsmittel enthalten.

Polymere organische Bindemittel, die sich besonders bewährt haben, sind Polyvinylpyrrolidone, Methylcellulosen, Hydroxyethylcellulosen, Hydroxypropylcellulosen, höhermolekulare Polyethylenglykole (Polyethylenoxide), Acrylsäure-(Co)Polymere, Methacrylsäure-(Co)Polymere und Addukte aus Kolophonium und ungesättigten Carbonsäuren, vorzugsweise Maleinsäure und Fumarsäure, die in Gegenwart von Ammoniak oder Aminen in Wasser löslich sind. Die Lüsterfarbe kann ein oder mehrere dieser polymeren Bindemittel enthalten.

Die Lüsterfarbe kann zusätzlich noch lösliche Silber- und Goldverbindungen oder kolloidales Gold enthalten, wodurch eine Variation des Farbtons der eingebrannten Metalloxid-Schichten erreicht wird. Der Silber- und Gold-Gehalt der Lüsterfarbe kann dabei bis zu etwa 3 Gewichts-% betragen.

Falls gewünscht, können wasserlösliche Weichmacher der Lüsterfarbe zugefügt werden, was sich vorteilhaft auf den Glanz der eingebrannten Schichten auswirkt. Geeignete Weichmacher finden sich unter den als Weichmacher bekannten Phosphorsäureestern, niedermolekularen Polyethylen- und Polypropylenglykolen, ihren Mono- und Diethern und Citronensäureestern.

Die Mengen der die Lüsterfarbe bildenden Bestandteile können variiert werden. Besonders bewährt hat sich jedoch die Lüsterfarbe folgender Zusammensetzung:
- 0,1 bis 15: Gewichts-% Metall als organische Metallverbindung,
- 10 bis 98,5: Gewichts-% organisches Lösungsmittel,
- 0 bis 85: Gewichts-% Wasser,
- 1 bis 30: Gewichts-% polymeres organisches Bindemittel und
- 0 bis 20: Gewichts-% Weichmacher.

Das Metall in der Lüsterfarbe besteht entweder aus Titan oder aus einem Gemisch aus Titan und einem oder mehreren der Metalle Chrom, Mangan, Eisen, Kobalt, Nickel, Kupfer, Zirkonium und Wismut, jeweils als organische Metallverbindung. Liegt ein Gemisch vor, so beträgt der Titan-Gehalt darin vorzugsweise mindestens 50 Gewichts-%.

Die Lüsterfarbe wird durch Mischen ihrer Bestandteile, falls erforderlich unter Erwärmen (maximal etwa 100° C), hergestellt. Um sie besser sichtbar zu machen, kann sie zusätzlich organische Farbstoffe, die in dem Träger-Medium löslich sind, enthalten.

Die Lüsterfarbe ist eine lagerstabile, homogene, klare Lösung und zeichnet sich durch ihren milden Geruch und ihre gesundheitliche Unbedenklichkeit aus.

Überraschenderweise bewirken die erfindungsgemäß ausgewählten Bindemittel und Lösungsmittel eine Verbesserung der Hydrolysebeständigkeit derjenigen unter den genannten Titan- und Metallverbindungen, die in der Literatur als relativ hydrolyseempfndlich beschrieben werden. Damit erklärt sich - zumindest teilweise - die unerwartete Stabilität und Haltbarkeit der Lüsterfarbe, wenn sie Wasser enthält.

Die Lüsterfarbe kann in allen üblichen Auftragsarten auf die zu dekorierenden Gegenstände aufgebracht werden, zum Beispiel mit Hilfe von Pinseln oder Walzen oder in Siebdruck-Technik. Falls erforderlich, kann sie mit Wasser verdünnt werden.

Die bei der Herstellung und Verarbeitung der Lüsterfarbe benutzten Geräte und Maschinen lassen sich mit Wasser oder wäßrigen Mitteln reinigen, so daß dafür der Gebrauch organischer Lösungsmittel vermieden wird und auch Be- und Entlüftungsmaßnahmen und Anlagen zur Reinigung der Abluft entfallen können.

Die Lüsterfarbe dient der Erzeugung dekorativer dünner Schichten auf Glas, Keramik und Porzellan. Auf die zu dekorierenden Gegenstände aufgetragen, bildet sie die Gegenstände gleichmäßig benetzende, homogene Filme mit nach dem Antrocknen glänzender Oberfläche. Durch Einbrennen bei Temperaturen zwischen 500 und 900° C werden hochglänzende, irisierende, haftfeste und fehlerfreie dünne Oxid-Schichten erhalten. Beim Brand entstehen keine korrosiven Zersetzungsprodukte.

Wie sich gezeigt hat, beruht die Qualität der Oxid-Schichten auf der erfindungsgemäßen Kombination der Metallverbindungen mit den organischen Lösungsmitteln und polymeren Bindemitteln und der Verträglichkeit aller Bestandteile miteinander. So ist zum Beispiel der Glanz der eingebrannten Schichten auch von der Art des polymeren Bindemittels abhängig.

Mit der erfindungsgemäßen Lüsterfarbe wird ein besonders für die Fliesenindustrie interessantes Dekor-Präparat zur Verfügung gestellt; denn in diesem Zweig der keramischen Industrie werden für die Applikation anorganischer Pigmente und Dekorfarben überwiegend wäßrige Medien eingesetzt.

Zur näheren Erläuterung werden in den folgenden Beispielen Lüsterfarben gemäß der Erfindung und die Herstellung von auf Porzellan und Keramik eingebranntem Lüster unter Verwendung dieser Farben beschrieben.

### Beispiel 1

Lüsterfarbe für das Auffragen mit dem Pinsel aus

| | | |
|---|---|---|
| 8 | Gewichts-% | Polyvinylpyrrolidon |
| 5 | Gewichts-% | Polyethylenglykol 4000 |
| 20 | Gewichts-% | Wasser |
| 25 | Gewichts-% | Ethanol |
| 17 | Gewichts-% | Propandiol-1,2 |
| 10 | Gewichts-% | Glycerin |
| 15 | Gewichts-% | Diisopropoxytitan-bis[triethanolamin]-Lösung |

Die Lüsterfarbe wird mit dem Pinsel in dünner Schicht auf einen glasierten Porzellanteller aufgetragen. Beim Einbrennen bei 820° C (Maximaltemperatur) entsteht ein hochglänzender, irisierender, silberweißer Lüster.

### Beispiel 2

Lüsterfarbe für den Siebdruck aus

| | | |
|---|---|---|
| 1,5 | Gewichts-% | Hydroxypropylcellulose |
| 16 | Gewichts-% | Wasser |
| 50 | Gewichts-% | Propandiol-1,2 |
| 10 | Gewichts-% | Butyldiglykol * |
| 10 | Gewichts-% | Polyethylenglykol 400 |
| 12 | Gewichts-% | Diisopropoxytitan-bis[acetylacetonat]-Lösung |
| 0,5 | Gewichts-% | Entschäumer auf Silicon-Basis (handelslüblich) |

| | | |
|---|---|---|
| * Diethylenglykolmonobutylether | | |

Die als klare geleeartige Paste vorliegende Lüsterfarbe wird durch ein aus Polyestergewebe bestehendes Sieb mit 150 Maschen/cm auf eine glasierte Keramikfliese aufgedruckt. Beim Einbrennen bei 780° C (Maximaltemperatur) entsteht ein hochglänzender, weiß-spiegelnder Lüster.

### Beispiel 3

Lüsterfarbe für das Auftragen mit dem Pinsel aus

| | | |
|---|---|---|
| 2 | Gewichts-% | Hydroxyethylcellulose |
| 20 | Gewichts-% | Wasser |
| 30 | Gewichts-% | Ethanol |
| 30 | Gewichts-% | Propandiol-1,2 |
| 8 | Gewichts-% | Butyldiglykol * |
| 2 | Gewichts-% | Ammoniumeisencitrat |
| 8 | Gewichts-% | Natriumtitancitrat |

| | | |
|---|---|---|
| * Diethylenglykolmonobutylether | | |

Die Lüsterfarbe wird mit dem Pinsel in dünner Schicht auf eine glasierte Keramikfliese aufgetragen. Beim Einbrennen bei 780° C (Maximaltemperatur) entsteht ein hochglänzender, beigebrauner Lüster.

### Beispiel 4

Lüsterfarbe für den Siebdruck aus

| | | |
|---|---|---|
| 15 | Gewichts-% | Polyvinylpyrrolidon |
| 5 | Gewichts-% | Wasser |
| 35 | Gewichts-% | Propandiol-1,2 |
| 10 | Gewichts-% | Polyethylenglykol 400 |
| 20 | Gewichts-% | Gold-Sol, 2 % Au in Wasser |
| 14 | Gewichts-% | Diisopropoxytitan-bis[acetylacetonat]-Lösung |
| 1 | Gewichts-% | Entschäumer auf Silicon-Basis (handelsüblich) |

Die als klare geleeartige Paste vorliegende Lüsterfarbe wird durch ein aus Polyestergewebe bestehendes Sieb mit 150 Maschen/cm auf eine glasierte Keramikfliese aufgedruckt. Beim Einbrennen bei 780° C (Maximaltemperatur) entsteht ein hochglänzender, irisierender, blauer Lüster.

## Patentansprüche

1. Lüsterfarbe für die Dekoration von Glas, Keramik und Porzellan aus einem organischen Träger-Medium, in dem Träger-Medium gelöster organischer Metallverbindung und gegebenenfalls Zusatzstoffen, gekennzeichnet durch
ein Träger-Medium aus mit Wasser mischbarem organischem Lösungsmittel, Wasser oder einem Gemisch aus dem organischen Lösungsmittel und Wasser und darin gelöstem polymerem organischem Bindemittel und
in dem Träger-Medium gelöste, thermisch zum Oxid zersetzbare organische Titanverbindung.

2. Lüsterfarbe nach Anspruch 1, gekennzeichnet durch
ein Träger-Medium aus mit Wasser mischbarem organischem Lösungsmittel, Wasser oder einem Gemisch aus dem organischen Lösungsmittel und Wasser und darin gelöstem polymerem organischem Bindemittel,
in dem Träger-Medium gelöste, thermisch zum Oxid zersetzbare organische Titanverbindung und
eine oder mehrere in dem Träger-Medium gelöste, thermisch zum Oxid zersetzbare organische Verbindungen der Metalle Chrom, Mangan, Eisen, Kobalt, Nickel, Kupfer, Zirkonium und Wismut.

3. Lüsterfarbe nach Anspruch 2, dadurch gekennzeichnet, daß als organische Metallverbindungen Acetate der Metalle eingesetzt werden.

4. Lüsterfarbe nach Anspruch 1 oder 2, dadurch gekennzeichnet, daß als organische Metallverbindungen Verbindungen der Metalle mit einem Alkanolamin eingesetzt werden.

5. Lüsterfarbe nach Anspruch 4, dadurch gekennzeichnet, daß als Alkanolamin Triethanolamin eingesetzt wird.

6. Lüsterfarbe nach Anspruch 1 oder 2, dadurch gekennzeichnet, daß als organische Metallverbindungen Verbindungen der Metalle mit einem Diketon eingesetzt werden.

7. Lüsterfarbe nach Anspruch 6, dadurch gekennzeichnet, daß als Diketon Acetylaceton eingesetzt wird.

8. Lüsterfarbe nach Anspruch 1 oder 2, dadurch gekennzeichnet, daß als organische Metallverbindungen Verbindungen der Metalle mit Hydroxycarbonsäuren eingesetzt werden.

9. Lüsterfarbe nach Anspruch 8, dadurch gekennzeichnet, daß als Hydroxycarbonsäure Milchsäure oder Citronensäure eingesetzt wird.

10. Lüsterfarbe nach Anspruch 1 oder 2, dadurch gekennzeichnet, daß als organische Metallverbindungen Verbindungen der Metalle mit einer Aminopolycarbonsäure eingesetzt werden.

11. Lüsterfarbe nach Anspruch 10, dadurch gekennzeichnet, daß als Aminopolycarbonsäure Ethylendiamintetraessigsäure, Nitrilotriessigsäure oder Hydroxyethylethylendiaminotriessigsäure eingesetzt wird.

12. Lüsterfarbe nach einem der Ansprüche 1 bis 11, dadurch gekennzeichnet, daß als organisches Lösungsmittel Ethanol, Propanol, Ethylenglykol, Propandiole, Glycerin, Diethylenglykol, Dipropylenglykol, Ethylenglykolmono- und -diether, Propylenglykolmono- und -diether, Diethylenglykolmono- und -diether, Dipropylenglykolmono- und -diether, Glykolsäurebutylester, Tetrahydrofurfurylalkohol, Tetrahydrofurfurylacetat oder ein Gemisch daraus eingesetzt wird.

13. Lüsterfarbe nach einem der Ansprüche 1 bis 12, dadurch gekennzeichnet, daß als polymeres organisches Bindemittel Polyvinylpyrrolidon, Methylcellulose, Hydroxyethylcellulose, Hydroxypropylcellulose, höhermolekulares Polyethylenglykol, Acrylsäure-(Co)Polymer, Methacrylsäure-(Co)Polymer, Addukt aus Kolophonium und ungesättigter Carbonsäure oder ein Gemisch daraus eingesetzt wird.

14. Lüsterfarbe nach einem der Ansprüche 1 bis 13, dadurch gekennzeichnet, daß sie zusätzlich einen oder mehrere wasserlösliche Weichmacher enthält.

15. Lüsterfarbe nach Anspruch 14, dadurch gekennzeichnet, daß als Weichmacher Phosphorsäureester, niedermolekulare Polyethylen- und Polypropylenglykole, deren Mono- und Diether und Citronensäureester eingesetzt werden.

16. Lüsterfarbe nach einem der Ansprüche 1 bis 15, gekennzeichnet durch
0,1 bis 15 Gewichts-% Metall als organische Metallverbindung,
10 bis 98,5 Gewichts-% organisches Lösungsmittel,
0 bis 85 Gewichts-% Wasser,
1 bis 30 Gewichts-% polymeres organisches Bindemittel und
0 bis 20 Gewichts-% Weichmacher.

## Claims

1. Lustre colour for decorating glass, ceramic and porcelain, comprising an organic medium, an organic metal compound dissolved in the medium and optionally additives, characterized by
a medium comprising a water-miscible organic solvent, water or a mixture of the organic solvent and water and a polymeric organic binder dissolved therein and
an organic titanium compound dissolved in the medium and thermally decomposable to give the oxide.

2. Lustre colour according to Claim 1, characterized by
a medium comprising a water-miscible organic solvent, water or a mixture of the organic solvent and water and a polymeric organic binder dissolved therein,
an organic titanium compound dissolved in the medium and thermally decomposable to give the oxide and one or more organic compounds of the metals chromium, manganese, iron, cobalt, nickel, copper, zirconium and bismuth, which compounds are dissolved in the medium and are thermally decomposable to give the oxide.

3. Lustre colour according to Claim 2, characterized in that the organic metal compounds used are acetates of the metals.

4. Lustre colour according to Claim 1 or 2, characterized in that the organic metal compounds used are compounds of the metals with an alkanolamine.

5. Lustre colour according to Claim 4, characterized in that the alkanolamine used is triethanolamine.

6. Lustre colour according to Claim 1 or 2, characterized in that the organic metal compounds used are compounds of the metals with a diketone.

7. Lustre colour according to Claim 6, characterized in that the diketone used is acetylacetone

8. Lustre colour according to claim 1 or 2, characterized in that the organic metal compounds used are compounds of the metals with hydrorycarboxylic acids.

9. Lustre colour according to Claim 8, characterized in that the hydroxycarboxylic acid used is lactic acid or citric acid.

10. Lustre colour according to Claim 1 or 2, characterized in that the organic metal compounds used are compounds of the metals with an aminopolycarboxylic acid.

11. Lustre colour according to Claim 10, characterized in that the aminopolycarboxylic acid used is ethylenediaminetetraacetic acid, nitrilotriacetic acid or hydroxyethylethylenediaminotriacetic acid.

12. Lustre colour according to any of Claims 1 to 11, characterized in that the organic solvent used is ethanol, propanol, ethylene glycol, a propanediol, glycerol, diethylene glycol, dipropylene glycol, ethylene glycol monoether or diether, propylene glycol monoether or diether, diethylene glycol monoether or diether, dipropylene glycol monoether or diether, butyl glycolate, tetrahydrofurfuryl alcohol, tetrahydrofurfuryl acetate or a mixture thereof.

13. Lustre colour according to any of Claims 1 to 12, characterized in that the polymeric organic binder used is polyvinylpyrrolidone, methylcellulose, hydroxyethylcellulose, hydroxypropylcellulose, relatively high molecular weight polyethylene glycol, acrylic acid (co)polymer, methacrylic acid (co)polymer, an adduct of rosin and an unsaturated carboxylic acid or a mixture thereof.

14. Lustre colour according to any of Claims 1 to 13, characterized in that it additionally contains one or more water-soluble plasticizers.

15. Lustre colour according to Claim 14, characterized in that the plasticizers used are phosphoric esters, low molecular weight polyethylene - glycols and polypropylene glycols, their mono- and diethers and citric esters.

16. Lustre colour according to any of Claims 1 to 15, characterized by
0.1 to 15% by weight of metal as an organic metal compound,
10 to 98.5% by weight of an organic solvent,
0 to 85% by weight of water,
1 to 30% by weight of a polymeric organic binder and
0 to 20% by weight of plasticizer.

## Revendications

1. Matière colorante lustrante pour la décoration du verte, de la céramique et de la porcelaine constituée par un véhicule organique, un composé métallique organique dissous dans le véhicule et éventuellement des additifs, caractérisée par
un véhicule constitué par un solvant organique miscible à l'eau, de l'eau ou un mélange constitué par le solvant organique et l'eau et un liant organique polymère dissous dans celui-ci et
un composé organique du titane thermiquement décomposable en l'oxyde, dissous dans le véhicule.

2. Matière colorante lustrante selon la revendication 1, caractérisée par
un véhicule constitué par un solvant organique miscible à l'eau, de l'eau ou un mélange constitué par le solvant organique et l'eau et un liant organique polymère dissous dans celui-ci,
un composé organique du titane thermiquement décomposable en l'oxyde, dissous dans le véhicule et
un ou plusieurs composés organiques des métaux chrome, manganèse, fer, cobalt, nickel, cuivre, zirconium et bismuth thermiquement décomposable en l'oxyde, dissous dans le véhicule.

3. Matière colorante lustrante selon la revendication 2, caractérisée en ce que l'on utilise comme composé métallique organique des acétates des métaux.

4. Matière colorante lustrante selon la revendication 1 ou 2, caractérisée en ce que l'on utilise comme composés métalliques organiques des composés des métaux avec une alcanolamine.

5. Matière colorante lustrante selon la revendication 4, caractérisée en ce que l'on utilise la triéthanolamine comme alcanolamine.

6. Matière colorante lustrante selon la revendication 1 ou 2, caractérisée en ce que l'on utilise comme composés métalliques organiques des composés des métaux avec une dicétone.

7. Matière colorante lustrante selon la revendication 6, caractérisée en ce que l'on utilise l'acétylacétone comme dicétone.

8. Matière colorante lustrante selon la revendication 1 ou 2, caractérisée en ce que l'on utilise comme composés métalliques organiques des composés des métaux avec des acides hydroxycarboxyliques.

9. Matière colorante lustrante selon la revendication 8, caractérisée en ce que l'on utilise l'acide lactique ou l'acide citrique comme acide hydroxycarboxylique.

10. Matière colorante lustrante selon la revendication 1 ou 2, caractérisée en ce que l'on utilise comme composés métalliques organiques des composés des métaux avec un acide aminopolycarboxylique.

11. Matière colorante lustrante selon la revendication 10, caractérisée en ce que l'on utilise comme acide aminopolycarboxylique l'acide éthylènediaminetétraacétique, l'acide nitrilotriacétique ou l'acide hydroxyéthyléthylènediaminotriacétique.

12. Matière colorante lustrante selon l'une des revendications 1 à 11, caractérisée en ce que l'on utilise comme solvant organique l'éthanol, le propanol, l'éthylèneglycol, des propanediols, la glycérine, le diéthylèneglycol, le dipropylèneglycol, l'éthylèneglycolmono- et diéther, le propylèneglycolmono- et diéther, le diéthylènemono- et diéther, le dipropylèneglycolmono- et diéther, le glycolate de butyle, l'alcool tétrahydrofurfurylique, l'acétate de tétrahydrofurfuryle ou un mélange de ceux-ci.

13. Matière colorante lustrante selon l'une des revendications 1 à 12, caractérisée en ce que l'on utilise comme liant organique polymère la polyvinylpyrrolidone, la méthylcellulose, l'hydroxyéthylcellulose, l'hydroxypropylcellulose, un polyéthylèneglycol de masse moléculaire élevée, un (co)polymère de l'acide acrylique, un (co)polymère de l'acide méthacrylique, un produit d'addition de colophane et d'acide carboxylique insaturé ou un mélange de ceux-ci.

14. Matière colorante lustrante selon l'une des revendications 1 à 13, caractérisée en ce qu'elle contient en outre un ou plusieurs plastifiants hydrosolubles.

15. Matière colorante lustrante selon la revendication 14, caractérisée en ce que l'on utilise comme plastifiants des esters de l'acide phosphorique, des polyéthylène- et polypropylèneglycols de faible masse moléculaire, leurs mono- et diéthers et des esters de l'acide citrique.

16. Matière colorante lustrante selon l'une des revendications 1 à 15, caractérisée par
0,1 à 15 % en masse de métal sous forme de composé métallique organique,
10 à 98,5 % en masse de solvant organique,
0 à 85 % en masse d'eau,
1 à 30 % en masse de liant organique polymère et
0 à 20 % en masse de plastifiant.
